# EUROPÄISCHE PATENTANMELDUNG

(11) **EP 4 752 329 A1**
(43) Veröffentlichungstag der Anmeldung: **03.06.2026**
(21) Anmeldenummer: 25219862.7
(22) Anmeldetag: 01.12.2025
(51) Int. Cl.: F01D 5/14, F01D 25/24, B23P 15/04

(54) **SCHAUFELKRANZ WIE STATORRING ODER LAUFRAD FÜR KLEINE DAMPFTURBINEN SOWIE VERFAHREN ZU DESSEN HERSTELLUNG**

(30) Priorität: 02.12.2024 DE 102024135670
(71) Anmelder: TKG Turbinenkomponenten Görlitz GmbH, 02827 Görlitz (DE)
(72) Erfinder: ROTHWEILER, Florian, 82152 Krailling (DE); DOMASCHKE, Michael, 02826 Görlitz (DE)
(74) Vertreter: Lorenz Seidler Gossel Part. mbB

(57) **Zusammenfassung**

Die Erfindung betrifft einen Schaufelkranz (1), insbesondere in Form eines Statorrings oder Laufrades, für kleine Dampfturbinen, sowie ein Verfahren zur Herstellung eines solchen Schaufelkranzes und die Anwendung des Schaufelkranzes in einer Turbomaschine. Das Verfahren umfasst das Herstellen mindestens zweier Trägerringe, Innenringe (2) und/oder Aussenringe (4), an deren inneren oder äusseren Umfangsseiten jeweils Schaufeln (3) angebracht sind, die auf die Trägerringe verteilt sind, sowie das Verbinden der mindestens zwei Trägerringe (2, 4) untereinander derart, dass die Schaufeln der mindestens zwei Trägerringe in alternierender Abfolge zueinander angeordnet sind und einen geschlossenen Schaufelkranz bilden.

## Beschreibung

Die Erfindung betrifft einen Schaufelkranz, insbesondere in Form eines Statorrings oder Laufrades, für kleine Dampfturbinen, sowie ein Verfahren zur Herstellung eines solchen Schaufelkranzes und die Anwendung des Schaufelkranzes in einer Turbomaschine.

Im Zuge des Trends der Dezentralisierung und Dekarbonisierung, wie beispielsweise Geothermieanlagen und Energierückgewinnung in Industrieanlagen, nimmt der Bedarf an kleinen Dampfturbinen und damit kleinen Schaufelkränzen stetig zu. Weiterhin finden solche kleinen Schaufelkränze aber auch generell in Turbomaschinen, wie Verdichtern oder Gas- sowie eben Dampfturbinen ihr Einsatzfeld.

Durch die verringerte Anlagengröße nehmen auch die Leistungsdaten ab. Sie liegen mittlerweile oft im Bereich kleiner 1 MW und gehen runter bis zu ca. 150 kW, und zukünftig vielleicht noch kleiner. Diese Verringerung betrifft folglich auch die Dampfturbinen, die zur Energierückgewinnung eingesetzt werden.

Somit müssen nun auch kleinere Schaufelkränze für die Turbomaschine wie Dampfturbinen hergestellt werden. Bislang kam hierzu größten Teiles eine Konstruktion zum Einsatz, bei der Drahterodieren eine wichtige Rolle in der Fertigung spielt. Dieses und anderen Verfahren stoßen nun, aufgrund der immer weiter abnehmenden Größe der Schaufeln an ihre Grenzen.

Deshalb wurden Schaufelkränze bzw. -räder mit solch geringer Größe bisher nun gefräst bzw. mangels Nachfrage auf Grund des hohen Preis-Leistungsverhältnisses gar nicht hergestellt. Das Problem an diesem Prozess bedingt sich aus der Geometrie der Schaufelräder mit sehr kleinen Spaltmaßen zwischen den benachbarten Schaufeln, bei einer dazu recht großen Länge der Schaufeln. Die Kanäle sind bis zu 50 mm tief und dabei <4mm breit. Deshalb werden sehr dünne und im Verhältnis dazu sehr lange Fräser benötigt, die bei sehr hohen Drehzahlen betrieben werden müssen und die zur Sicherstellung eines effizienten Herstellungsprozesses mit hohen Abtragsraten, sehr schnell abbrechen. Um bei sehr kleinen Fräserdurchmessern die bestimmungsgemäßen Schnittgeschwindigkeiten durch entsprechende Umfangsgeschwindigkeit am Fräser zu erzielen, wird mit Fräserdrehzahlen im Bereich von etwa 30.000 U/min gearbeitet, was schnell zu Fräserbrüchen führen kann, die im Fertigungsprozeß bisweilen nur schwer bemerkt werden.

Die Schrift EP 2 650 474 A2 offenbart, dass die Schaufelräder einer Gasturbine aus mehreren Teilen aufgebaut sein können. Auf diese Weise kann ein Herstellungsprozess eingesetzt werden, der die Erzeugung interner Kühlstrukturen ermöglicht.

Aufgabe der vorliegenden Erfindung ist es, einen verbesserten Schaufelkranz sowie ein verbessertes Verfahren zu dessen Herstellung zu schaffen, die Nachteile des Standes der Technik zu vermeiden und letzteren in vorteilhafterweise weiterzubilden. Insbesondere soll ein verbesserter Schaufelkranz mit kleinem Durchmesser für eine Turbomaschine geschaffen werden, der im Fertigungsprozess weniger Probleme bereitet, sowie ein verbessertes Verfahren zu dessen Herstellung zu schaffen.

Diese Aufgabe wird durch den Schaufelkranz gemäß Anspruch 1, eine Turbomaschine gemäß Anspruch 28, sowie das Verfahren gemäß Anspruch 29 gelöst. Bevorzugte Weiterbildungen der Erfindung sind in den Unteransprüchen offenbart.

Die vorliegende Erfindung umfasst also einen Schaufelkranz, insbesondere in Form eines Statorrings oder Laufrades für Dampfturbinen, mit einer Anordnung aus mindestens zwei Trägerringen, die an ihren Umfangsseiten Schaufeln umfassen. Die Trägerringe sind hierbei direkt oder über ihre Schaufeln miteinander verbunden. Die Anzahl der Schaufeln verteilt sich möglichst gleichmäßig auf die Anzahl der Trägerringe und die Schaufeln der mindestens zwei Trägerringe sind gleichmäßig über den Umfang der einzelnen Trägerringe angeordnet, wobei die Schaufeln der mindestens zwei Trägerringe in alternierender Abfolge zueinander angeordnet sind, sodass ein größerer Abstand zwischen den einzelnen Schaufeln an jeweils einem Innenring entsteht. Die Schaufeln der Trägerringe sind einstückig ausgeführt und weisen keine Teilung auf. Die Trägerringe können dabei radial einteilig oder mehrteilig sein.

Anders als gemäß dem Stand der Technik in der Schrift EP 2 650 474 A2, sind also nicht einzelne Teile einer Schaufel auf zwei Ringe verteilt, sodass diese letztlich beim Zusammensetzen der Ringe eine Schaufel bilden, sondern die Schaufeln auf den Trägerringen der vorliegenden Erfindung bestehen aus einem Stück und weisen keine Teilung auf. Dies ermöglicht eine alternierende Anordnung der Schaufeln der mindestens zwei Trägerringe zueinander.

Vorzugsweise sind die Schaufeln anzahlmäßig dabei zumindest näherungsweise gleichmäßig auf die Trägerringe aufgeteilt und zumindest näherungweise gleichmäßig über deren Umfang verteilt angeordnet. Dabei kann es jedoch auch sein, bspw. bei einer ungeraden Schaufelzahl, dass zwei Schaufeln eines Rings näher aneinander sind als die restlichen Schaufeln des Rings, oder ein zusätzlicher Trägerring mit nur einer Schaufel oder deutlich weniger Schaufeln als die anderen Ringe vorgesehen wird.

Die mindestens zwei Trägerringe des Schaufelkranzes können als Innenringe ausgebildet sein, an deren Außenseiten jeweils Schaufeln angebracht sind und die gestapelt aufeinander liegen. In diesem Fall ragen die Schaufeln von den Trägeringen zum Außenumfang des Schaufelkranzes hin, wobei die Schaufeln, insbesondere bei einem Laufrad, außen frei auskragen oder, insbesondere bei einem Statorring, dort durch einen Außenring eingefaßt sein können.

Die mindestens zwei Trägerringe des Schaufelkranzes können aber auch als Außenringe ausgebildet sein, an deren Innenseiten jeweils Schaufeln angebracht sind und die gestapelt aufeinander liegen. Somit ragen die Schaufeln von den Trägeringen in das Innere des Schaufelkranzes, wobei die Schaufeln nach innen hin freiauskragen oder dort durch einen Innenring eingefaßt sein können.

Bei sozusagen einer Mischform kann aber auch einer der mindestens zwei Trägerringe einen Innenring bilden und ein weiterer der mindestens zwei Trägerringe einen Außenring bilden, an deren Außenseiten bzw. Innenseiten Schaufeln angebracht sind und die ineinandergesteckt werden können, sodass sie über ihre Schaufeln miteinander verbunden sein können.

Insbesondere können die genannten Schaufeln integral einstückig, materialhomogen an den jeweiligen Trägerring angeformt sein und sozusagen en Block mit dem jeweils zugehörigen Trägerring aus demselben Rohling, bspw einer Blechplatine bzw. Metalltafel, herausgearbeitet sein, so dass die Schaufeln nicht separat gefertigt und nachträglich am Trägerring befestigt werden müssen. Insbesondere kann jeder Trägerring mit seinen Schaufeln frei von Gefügeveränderungen in den Übergangsbereichen zwischen Schaufeln und Trägerring, wie sie bspw. beim Anschweißen der Schaufeln am Trägerring auftreten würden, ausgebildet sein. Durch die integral einstückige Bauweise von Trägerring und Schaufeln kann in den Wurzelbereichen der Schaufeln eine besonders stabile Ausbildung und Befestigung der Schaufeln ohne Verzug erreicht werden.

In vorteilhafter Weiterbildung der Erfindung wird jeder Trägerring mit seinen zugehörigen Schaufeln aus einem Rohling spanend herausgearbeitet, wobei die Schaufeln gefräst und die Ringkontur des Innenrings zumindest teilweise gedreht werden können.

Gemäß einer möglichen Ausgestaltung der vorliegenden Erfindung ist vorgesehen, dass der Schaufelkranz einen den Schaufelkranz umfassenden Außenring aufweist. Der Außenring ist hierbei mit den mindestens zwei als Innenring ausgebildeten Trägerringen verbunden, und zwar insbesondere über die dazwischen liegenden Schaufeln.

Vorteilhafterweise kann der Außenring mittels Verbindungselementen, wie Pins oder Schrauben, mit mindestens jeweils einer Schaufel eines jeden der mindestens zwei Trägerringe formschlüssig verbunden sein. Um Stabilität zu erzielen kann der Außenring mit jeweils zumindest zwei oder mehr Schaufeln eines jeden Innenrings form- und/oder kraftschlüssig, ggf. auch stoffschlüssig verbunden sein. Um allen Schaufeln Stabilität zu geben, sind vorzugsweise alle Schaufeln starr am Außenring befestigt.

Bilden die Trägerringe zwei aufeinander gestapelte Aussenringe, kann der die dann nach innenauskragenden Schaufeln einfassende Innenring analog mit den Schaufeln verbunden sein.

Gemäß einer möglichen Ausgestaltung der vorliegenden Erfindung ist vorgesehen, dass der die Schaufeln einfassende Außen- oder Innenring durch stoffschlüssige Verbindungsmittel, wie eine Klebe- oder Löt- oder Schweißverbindung mit mindestens jeweils einer Schaufel oder der durchgängigen Ringseite der mindestens zwei Trägerringe verbunden ist.

Gemäß einer möglichen Ausgestaltung der vorliegenden Erfindung ist vorgesehen, dass die mindestens zwei Trägerringe mit flachen Stirnseiten aufeinander oder ineinander liegen und durch Verschweißen oder Verlöten oder Verkleben oder Verschrauben miteinander verbunden sind.

Die zuvor genannten Verbindungselemente können sich insbesondere durch Durchgangsausnehmungen im Außenring bzw. Innenring hindurch in Sacklöcher in die jeweilige Schaufel hineinerstrecken.

Unabhängig hiervon können, wenn die mindestens zwei Trägerringe mit mindestens jeweils einer Schaufel mit dem Außen- bzw. Innenring verbunden sind, die Schaufeln aller Trägerringe mit ihren von den Trägerringen abstehenden Enden an eine Innenkontur des Außenrings bzw. - dazu analog - an die Außenkontur des Innenrings formangepaßt sein und im wesentlichen spaltfrei auf der genannten Innenkontur des Außenrings bzw. Außenkontur des Innenrings sitzen, wobei die auskragenden Enden der Schaufeln gemeinsam eine Hüllkontur definieren können, die komplementär zur Innenkontur des Außenrings bzw. zur Außenkontur des Innenrings ausgebildet ist.

Beispielsweise kann die genannte Hüllkontur zylindrisch oder auch kegelig sein und dabei im Durchmesser so an die Innenumfangskontur des Außenrings bzw. - analog dazu - an die Außenkontur des Innenrings angepaßt sein, dass einerseits ein klemmfreies Einschieben der Trägreringe mitsamt Schaufeln in den Außenring bzw. in den Innenring möglich ist, andererseits dabei eine im wesentlichen spaltfreie oder mit einem leichten Spalt versehene oder anderweitig definierte Passung zustande kommt.

Insbesondere können die Schaufeln, wenn die mindestens zwei Trägerringe mit mindestens jeweils einer Schaufel mit dem Außenring verbunden sind, an ihren äußere Enden derart konturiert und bemessen werden, dass jeder Trägerring mit seinen Schaufeln in achsialer Richtung in den Außenring paßgenau einschiebbar ist, derart, dass die Schaufeln mit ihren äußeren Enden spaltfrei auf dem Innenumfangskontur des Außenrings aufsitzen oder definierte Spalte und Positionierflächen für bestimmte Fügeverfahren wie Kleben, Löten, Schweißen, Elektronenstrahlschweißen, Laserschweißen aufweisen.

Die Trägerringe mitsamt Schaufeln können dabei von gegenüberliegenden Stirnseiten her in den Außenring eingesetzt bzw. eingeschoben werden, was es auch ermöglicht, bei bspw. stundenglasartiger Einschnürung der Innenumfangskontur des Außenrings die Schaufeln im wesentlichen spaltfrei und paßgenau an die Innenumfangskontur des Aussenrings zu setzen.

Gleiches ist analog möglich, wenn die Trägeringe Außenringe bilden und mitsamt Schaufeln in einen Innenring eingeschoben werden.

Gemäß einer möglichen Ausgestaltung der vorliegenden Erfindung ist vorgesehen, dass die mindestens zwei Trägerringe untereinander eine formschlüssige Verbindung eingehen. Hierbei können die Trägerringe beispielsweise Abstufungen aufweisen, welche sich ineinander setzen lassen, bspw. in Form einer Ringnut oder einer Schulter an einem Trägerring und einem Ringvorsprung oder einem Kragen am anderen Trägerring.

Weiterhin kann alternativ oder zusätzlich eine Kombination aus Löchern und Zapfen genutzt werden. Bspw. kann ein Ring stirnseitig vorspringende Zapfen bzw. Pins und der andere Ring ein passendes Lochmuster aufweisen, so dass die Trägerringe stirnseitig passgenau aneinander und mit den Vorsprüngen und Ausnehmungen ineinander setzbar sind. Hierdurch kann eine exakte rotarische Ausrichtung der Trägerringe zueinander erreicht werden, die eine gleichmäßige Teilung der Schaufelanordnung bzw. gleiche Spaltmaße zwischen den Schaufeln verschiedener Trägerringe sicherstellt und verhindert, dass sich die Trägerringe und damit die Schaufeln während des Montage- bzw. Fügeprozesses ungewollt zueinander verdrehen.

Vorzugsweise können die Trägerringe miteinander verbunden werden, nachdem die Trägerringe nebst Schaufeln in den Außenring eingesetzt bzw. auf den Innenring gestzt worden sind, so dass die Schaufeln eines jeden Trägerrings separat am Außenring bzw. Innenring ausgerichtet werden können. Alternativ können die Trägerringe aber ggf. auch vor dem Einsetzen oder während des Einsetzens der Schaufeln in den Außen- bzw. Innenring miteinander verbunden werden. Bspw. kann Klebstoff auf zumindest einem der Trägerringe bspw. stirnseitig aufgebracht werden, bevor der Trägerring in den Außenring eingesetzt bzw. auf den Innenring gesetzt wird, so dass die klebstofffeuchten Stirnseiten der Innenringe aufeinander gelangen bzw. gefügt werden, wenn der weitere Trägerring mitsamt Schaufeln in den Außenring eingesetzt bzw. auf den Innenring gesetzt wird.

Gemäß einer möglichen Ausgestaltung der vorliegenden Erfindung ist vorgesehen, dass der Abstand einer Schaufel eines Trägerrings zur Schaufel eines weiteren Trägerrings nahezu beliebig klein werden kann und Spaltmaße von weniger als 4 mm betragen kann. Trotzdem kann durch die mehreren Trägerringe und die damit erreichte Untergliederung des Schaufelsatzes ein Fräser zum Formen der Schaufeln verwendet werden, der einen Durchmesser von deutlich mehr als 4 mm besitzt.

Gemäß einer möglichen Ausgestaltung der vorliegenden Erfindung ist vorgesehen, dass die Länge einer Schaufel größer als 20 mm ist.

Gemäß einer möglichen Ausgestaltung der vorliegenden Erfindung ist vorgesehen, dass der Durchmesser der mindestens zwei Trägerringe kleiner als 180 mm oder kleiner als 150 mm oder kleiner als 120 mm ist, wobei im Zuge der immer kleineren Anlagengrößen auch Schaufelkränze mit noch kleineren Innendurchmesser einfach herstellbar sind, ggf. dann mit drei oder mehr als drei Trägerringen, um ein ausreichendes Spaltmaß zwischen den Schaufeln an einem Innenring zu haben, das das Fräsen mit einem ausreichend dicken und damit stabilen Fräser gestattet.

Gemäß einer möglichen Ausgestaltung der vorliegenden Erfindung ist vorgesehen, dass die Trägerringe den gleichen Durchmesser und die Schaufeln den gleichen Durchmesser und die gleiche Breite und die gleiche Länge haben.

Insgesamt können die Trägerringe im Wesentlichen flache Scheiben bilden, von denen die Schaufeln außen- oder innenumfangsseitig auskragen, wobei sich die Schaufeln in Ebenen erstrecken können, die jeweils koplanar zu dem zugehörigen Trägerring sind. Der Außenring kann in der Ebene der Trägerringe angeordnet bzw. im Wesentlichen ohne Axialversatz zu den Trägerringen und/oder den Schaufeln angeordnet sein.

Der Schaufelkranz kann einen Axialschaufelkranz bilden, dessen Schaufeln Axialschaufeln bilden. Der Außenring und die Trägerringe können zwischen sich einen Strömungskanal bilden, in dem die Schaufeln angeordnet sind. Weiterhin können die Trägerringe mit einer zur Innenseite nicht abgeschlossenen, offenen Anordnung der Schaufeln einen Strömungskanal bilden.

Vorzugsweise ergänzen sich die genannten Außenumfänge der Trägerringe bündig zu einer gemeinsamen, harmonisch konturierten, insbesondere zylindrischen oder kegeligen Innenleitfläche des genannten Strömungskanals, der zentral zwischen Außenring und Trägerring durch das Schaufelrad hindurchführt.

Im Bereich der Schaufeln verzweigt sich dabei der genannte Strömungskanal in eine Vielzahl von Strömungskanälen, die jeweils zwischen zwei benachbarten Schaufeln hindurchführen, die zu verschiedenen Trägerringen gehören.

Alternativ kann die Anordnung der Schaufeln wie erläutert zwischen Außenring und Trägerringen getauscht werden, sodass die Schaufeln an zwei oder mehrere Außenringe in diesem Sinn angefräst werden und anschliessend mit einem Trägerring ohne oder mit Schaufeln verbunden werden.

Die Trägerringe und der Außenring können radial in mehrere Segmente geteilt sein. Der Schaufelkranz kann radial in mehrere Segmente geteilt sein.

Um beliebige Schaufelzahlen zu erreichen, kann die Verteilung der Schaufeln nicht gleichmäßig erfolgen oder mit Einzelschaufeln kombiniert werden. Anstatt eines zweiten Ringes können auch Einzelschaufeln in den ersten Innenring eingesetzt werden.

Die Erfindung umfasst weiterhin eine Turbomaschine, wie insbesondere eine Dampfturbine, welche den oben beschriebene Schaufelkranz beinhaltet.

Das erfindungsgemäße Verfahren umfasst, wie schon zum Ausdruck gebracht, das Herstellen mindestens zweier Trägerringe an deren inneren oder äußeren Umfangsseiten jeweils Schaufeln angebracht sind, die auf die Trägerringe verteilt sind . Weiterhin, umfasst das Verfahren das Verbinden der mindestens zwei Trägerringe untereinander derart, dass die Schaufeln der mindestens zwei Trägerringe in alternierender Abfolge zueinander angeordnet sind.

Somit können die mindestens zwei Trägerringe einen nach Außen homogen erscheinenden bzw. einteilig erscheinenden Schaufelkranz bilden.

Gemäß einer möglichen Ausgestaltung der vorliegenden Erfindung ist vorgesehen, dass ein gemeinsamer Außenring einstückig geformt bzw. ausgebildet und mit dem ersten Trägerring und dem mindestens zweiten Trägerring verbunden wird.

Gemäß einer möglichen Ausgestaltung der vorliegenden Erfindung ist vorgesehen, dass der Außenring aus einem Rohteil gefräst und/oder gefräst oder in anderer Weise spanend hergestellt wird.

Gemäß einer möglichen Ausgestaltung der vorliegenden Erfindung ist vorgesehen, dass jeder der Trägerringe einschließlich seiner Schaufeln aus einem Rohteil gefräst wird.

Vorteilhafterweise können die Außenseiten der Schaufeln der Trägerringe mit Bohrungen versehen werden, in die Befestigungsmittel zum Befestigen des Außenrings an den Schaufeln eingebracht werden können.

Vorzugsweise werden die genannten Bohrungen bzw. Ausnehmungen in das Rohteil, aus dem der jeweilige Trägerring nebst Schaufeln einstückig gefertigt wird, schon eingebracht, bspw. gebohrt, bevor die Schaufeln aus dem Rohteil herausgearbeitet werden. Hierdurch können die bspw. sacklochartigen Ausnehmungen in eine noch stabiles, steifes, im wesentlichen plattenförmiges Werkstück und nicht in die später sehr dünnen, ohne Außenring frei auskragenden und per se nachgiebigen bzw. wenig stabilen Schaufeln eingebracht werden, die beim Bohren dem Bohrervorschub durch Nachgeben auszuweichen versuchen würden. Dasselbe gilt für den Fall, dass die Schaufeln der Trägerringe nach innen gerichtet sind und einen offenen Abschluss bilden.

Gemäß einer möglichen Ausgestaltung der vorliegenden Erfindung ist vorgesehen, dass die Innenringe mit einem Durchmesser kleiner als 180 mm ausgebildet werden.

Vorteilhafterweise kann der Außenring mit Durchgangsbohrungen versehen werden, die mit den Sacklochbohrungen in den Schaufeln fluchten, wenn Trägerringenebst Schaufeln in den Außenring eingesetzt worden sind. Somit können Pins, Stifte oder auch Schrauben durch den Außenring hindurch in die Schaufeln hinein eingesetzt werden, um die Schaufeln formschlüssig mit dem Außenring starr zu verbinden.

Alternativ oder zusätzlich kann der Außenring auch durch stoffschlüssige Verbindungsmittel, wie eine Klebe- oder Löt- oder Schweißverbindung mit mindestens jeweils einer Schaufel der mindestens zwei Trägerringe verbunden werden.

Gemäß einer möglichen Ausgestaltung der vorliegenden Erfindung ist vorgesehen, dass die Lötverbindung mit einem Lot, das eine Schmelztemperatur von 500 °C oder mehr aufweist, hergestellt wird.

Gemäß einer möglichen Ausgestaltung der vorliegenden Erfindung ist vorgesehen, dass die mindestens zwei Trägerringe mit flachen Stirnseiten aufeinandergelegt oder ineinandergelegt werden und durch Verschweißen, Verlöten, Verkleben oder Verschrauben starr miteinander verbunden werden.

Alternativ können die mindestens zwei Trägerringe, einer als Außenring und einer als Innenring ausgebildet, ineinander gesteckt werden und durch Verschweißen, Verlöten, Verkleben oder Verschrauben miteinander verbunden werden.

Alternativ oder zusätzlich können die mindestens zwei Trägerringe untereinander auch formschlüssig verbunden werden, bspw. durch Schrauben, Stift-/Lochverbindern und/oder zueinander komplementäre Nut-/Ringkonturen oder Schulter-/Kragenkonturen, die ineinander greifen können, wenn die Trägerringe aufeinandergesetzt werden.

Gemäß einer möglichen Ausgestaltung der vorliegenden Erfindung ist vorgesehen, dass die Schaufel eines Trägerrings in einem Abstand von weniger als 4 mm zur Schaufel des mindestens zweiten Trägerrings angeordnet wird.

Die Erfindung wird nachfolgend anhand eines Ausführungsbeispiels und der Zeichnungen näher erläutert.

Hierbei zeigen:
- Fig. 1: eine Explosionszeichnung zu den Einzelelementen eines Schaufelkranzes mit zwei Trägerringen, welche als Innenringe gestaltet sind, in einer Ausgestaltung der Erfindung mit einem Außenring,
- Fig. 2: den Schaufelkranz mit zwei Trägerringen und einem Außenring in einer a) Draufsicht und einem b) Querschnitt,
- Fig. 3: eine Darstellung des Außenrings a) als Rohteil und b) nach der Bearbeitung mit Durchgangsbohrungen und Pins,
- Fig. 4: eine Darstellung eines Trägerrings: a) mit Bohrungen an Außenseite in der Bearbeitung, b) mit Schaufeln, welche an Außenseite die Bohrungen aufweisen, in der Bearbeitung und c) fertiger Trägerring mit Schaufeln, Bohrungen und angepasster Dicke des Trägerrings ab den inneren Enden der Schaufeln,
- Fig. 5: eine Darstellung der Montageschritte eines Trägerrings an den Außenring durch Pins in a) und b). Fertig montierter Trägerring mit detaillierter Darstellung der Verbindung des Außenrings über Pins mit den Schaufeln des Trägerrings, und
- Fig. 6: eine Darstellung der Montageschritte eines zweiten Trägerrings an den Außenring mit erstem Trägerring durch Pins in a) und b). Fertig montierter Trägerring mit detaillierter Darstellung der Verbindung des Außenrings über Pins mit den Schaufeln des ersten und des zweiten Trägerrings.

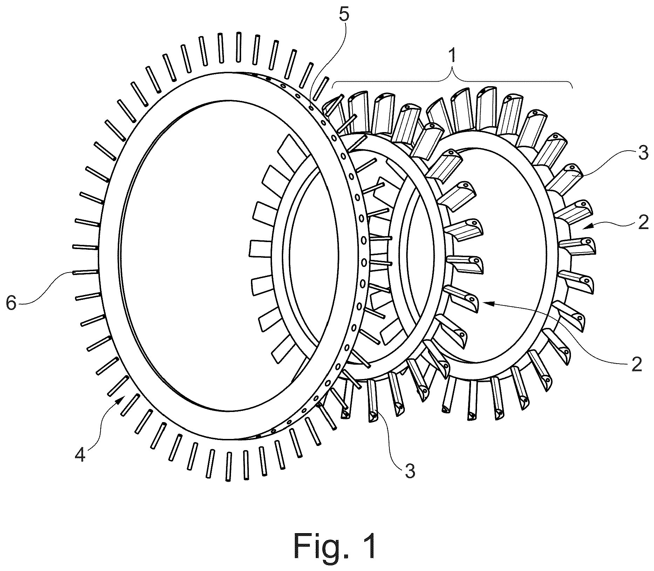

Fig. 1 zeigt eine Explosionszeichnung der gestapelten Einzelelemente eines Schaufelkranzes 1 in einer Ausführungsvariante mit zwei Trägerringen 2 und in einer möglichen Ausführungsform mit einem Außenring 4. Die Trägerringe 2, in einer Ausgestaltung als Innenringe, weisen an ihren Außenseiten Schaufeln 3 auf. Die zwei Trägerringe können die gleiche Anzahl an Schaufeln 3 aufweisen.

Die Schaufeln 3 sind vorzugsweise zumindest näherungsweise gleichmäßig über den Umfang der einzelnen Trägerringe 2 angeordnet. Die Schaufeln 3 der Trägerringe 2 sind aus einem Stück gefertigt und nicht aus mehreren Teilen zusammengefügt.

Der Schaufelkranz 1 kann auch aus drei Trägerringen aufgebaut sein, wobei sich dann die Anzahl der Schaufeln 3 auf die 3 Trägerringe verteilt. Hierdurch kann sich der Abstand der Schaufeln 3 auf dem Umfang der einzelnen Trägerringe 2 vergrößern.

Der Schaufelkranz 1 kann zusätzlich einen Außenring 4 umfassen. Der Außenring kann Durchgangsbohrungen 5 aufweisen. Durch die Durchgangsbohrungen 5 können Pins 6 oder Schrauben geführt werden.

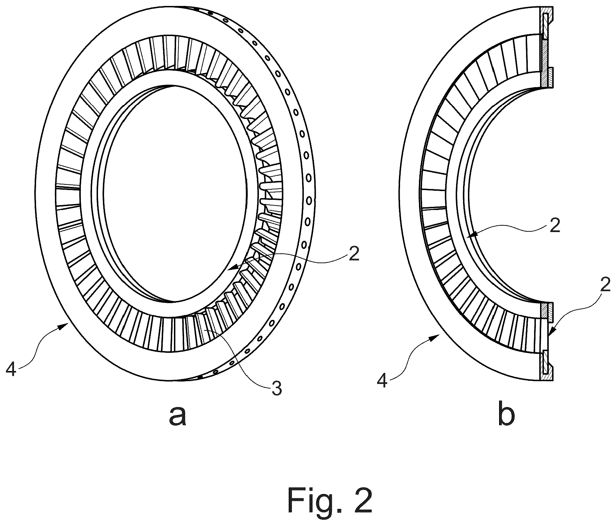

Fig. 2 a zeigt einen Schaufelkranz 1 in der Ausführungsform mit zwei Trägerringen 2 und einem Außenring 4 in zusammengesetzter bzw. montierter Ausgestaltung. In der Darstellung des Querschnitts in der Fig. 2 b wird deutlich, dass die beiden Trägerringe 2 den gleichen Durchmesser haben können. Ebenso wird dargestellt, dass die Schaufeln 3 den gleichen Durchmesser und die gleiche Breite sowie die gleiche Länge haben können.

Der Durchmesser der Trägerringe 2 kann kleiner als 180 mm oder kleiner als 150 mm oder kleiner als 120 mm sein. Die Länge der Schaufeln 3 kann größer als 20 mm sein.

Die Trägerringe 2 können in ihrer gestapelten Ausprägung, somit ein passendes Gegenstück zum Außenring 4 bilden, in der Weise, dass die Breite der gestapelten Trägerringe der Breite des Außenrings 4 entspricht.

Die Schaufeln 3 der zwei Trägerringe 2 sind in alternierender Abfolge zueinander angeordnet. Der Abstand einer Schaufel 3 des ersten Trägerrings 2 zur benachbarten Schaufel 3 des weiteren Trägerrings 2 kann weniger als 4 mm betragen.

Der Außenring 3 kann mittels Verbindungselementen wie Schrauben 6 oder Pins mit den Schaufeln 3 der Trägerringe 2 formschlüssig verbunden sein. Hierzu können die Schaufeln 3 Bohrungen 8 aufweisen. Die Schrauben 6 oder Pins 6 können durch die Durchgangsbohrungen 5 des Außenringes 4 geführt sein und von den Bohrungen 8 aufgenommen sein, sodass eine Verbindung besteht. Diese Art der Verbindung kann für eine oder mehrere Schaufeln 3 der jeweiligen Trägerringe2 mit dem Außenring 4 vorliegen.

Der Außenring 4 kann ausschließlich oder in Kombination zu den Verbindungen über Pins 6 oder Schrauben 6, durch stoffschlüssige Verbindungsmittel mit den Schaufeln 3 oder der durchgängigen Ringseite der Trägerringe verbunden sein. Die stoffschlüssige Verbindung kann durch eine Klebe- oder Löt- oder Schweißverbindung ausgeführt sein. Diese Art der Verbindung kann für eine oder mehrere Schaufeln 3 der jeweiligen Trägerringe 2 mit dem Außenring 4 vorliegen.

Die gestapelten Trägerringe 2 können ebenfalls untereinander verbunden sein. Es besteht die Möglichkeit, dass die Trägerringe 2 mit ihren Stirnseiten flach aufeinander liegen und durch Verschweißen oder Verlöten oder Verkleben oder Verschrauben miteinander verbunden sind.

Alternativ können die Trägerringe ausschließlich oder in Kombination zu den stoffschlüssigen Verbindungen auch eine formschlüssige Verbindung aufweisen. Hierbei können die Innenringe 2 beispielsweise Abstufungen aufweisen, welche sich ineinander setzen lassen. Weiterhin kann eine Kombination aus Löchern an einem Trägerring 2 und Zapfen an einem anderen Trägerring 2 genutzt werden. Alternativ hierzu ist auch eine Kombination mit einer Schraubverbindung möglich.

Der Schaufelkranz 1 kann in verschiedenen Turbomaschinen, wie Dampf- oder Gasturbinen oder Verdichtern, zum Einsatz kommen. Insbesondere kann der Schaufelkranz einen Statorring bilden, bspw. in Form eines axial arbeitenden Statorrings. GGf. kann der Schaufelkranz aber auch ein sich drehendes Turbinenrad bilden, und bspw. auf einer Welle montiert werden. Unabhängig hiervon kann der Schaufelkranz in einer Dampfturbine verwendet werden, ggf. aber auch in einer Gasturbine oder einem Verdichter.

Zur Herstellung des Schaufelkranzes 1 kommt ein Verfahren zum Einsatz, welches sich in die Herstellung der Trägerringe 2 und der anschließenden Verbindung der Trägerringe 2 untereinander, unterteilen lässt.

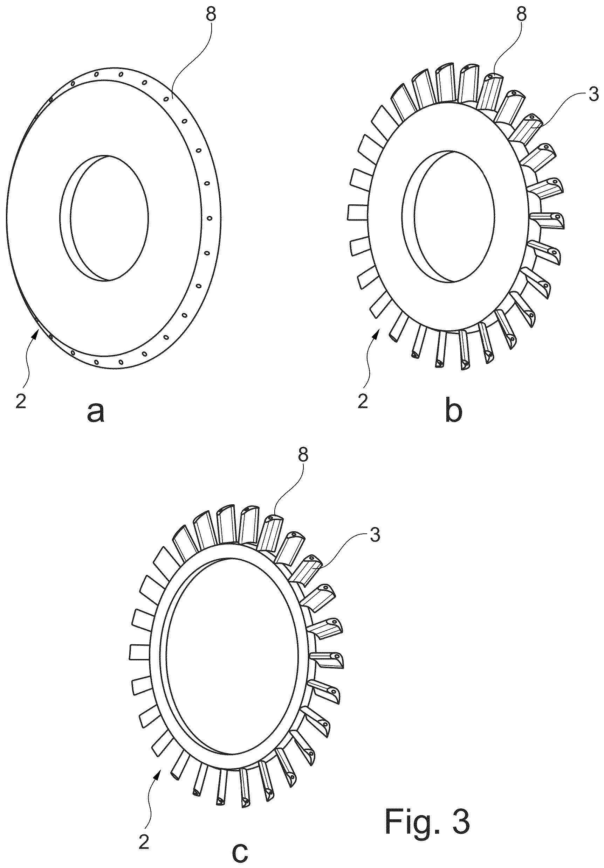

In Fig. 3 a - c ist ein Trägerring 2 in verschiedenen Stufen der Herstellung gezeigt. Der Trägerring 2 kann einschließlich der Schaufeln 3 einstückig aus einem Rohteil gefräst werden und so in seine endgültige Form gebracht werden, wobei der Durchmesser kleiner als 180 mm sein kann. Das spanende Formen der Innenringkontur kann auch einen oder mehrere Dreh-Schritte umfassen.

Der Trägerring 2 kann, wie in Fig. 3 a gezeigt, mit Bohrungen 8 versehen werden. Die Anordnung der Bohrungen 8 und deren Abstand zueinander kann der späteren Anordnung der Schaufeln 3 entsprechen, sodass eine oder mehrere Schaufeln an ihrer Außenseite eine Bohrung 8 aufweisen, wie in Fig. 3 b gezeigt. Hierbei können die Schaufeln 3 aus der Rohform gefräst werden, sodass die Schaufeln 3 einstückig sind und nicht aus mehreren Teilen bestehen.

Wie in Fig. 3 c gezeigt, kann die Dicke des Trägerrings 2 unterhalb des unteren Endes der Schaufeln 3 so angepasst werden, dass ein Teil des Fußes der Schaufel 3 freistehend gestaltet ist, d.h. er ist größer als die Dicke des Trägerrings 2 unterhalb des unteren Endes der Schaufel 3.

Auf diese Weise kann ein weiterer Trägerring 2 beim Verbinden der Trägerringe 2 untereinander, unterhalb dieses freistehenden Teils des Fußes der Schaufel 3 angeordnet sein.

Insbesondere können die Schaufeln 3 an den Trägerringen 2 zu verschiedenen Stirnseiten hin vorspringend ausgebildet werden, so dass die Schaufeln 3 trotz Anordnung an verschiedenen Trägerringen 2 annähernd in dergleichen Ebene zu liegen kommen, wenn die Ringe 2 aufeinander gefügt werden. Bspw. können die Schaufeln 3 des stromaufseitig angeordneten Trägerrings 2 stromabseitig über diesen überstehen und mit dem stromabseitigen Trägerring 2 überlappen, während die Schaufeln 3 des stromabseitig angeordneten Trägerrings 2 stromaufseitig über diesen überstehen und mit dem stromaufseitigen Trägerring 2 überlappen.

Auf diese Weise kann eine alternierende Anordnung der Schaufeln 3 der einzelnen Trägerringe 2 erzielt werden, wobei die Schaufeln 3 jeweils deckungsgleich in ihrer Abfolge im Umfang der Trägerringe angeordnet sind.

Die Schaufeln 3 können hierbei in einem regelmäßigen Abstand von weniger als 4 mm zueinander angeordnet sein.

Die Verbindung der gestapelten Trägerringe untereinander, welche mit ihren Stirnseiten flach aufeinandergelegt werden können, kann durch eine stoffschlüssige Verbindung erreicht werden, wie beispielsweise durch Verschweißen oder Verlöten oder Verkleben.

Alternativ können die Trägerringe ausschließlich oder in Kombination zu der stoffschlüssigen Verbindung auch durch eine formschlüssige Verbindung aneinander fixiert werden.

Beispielsweise können Schraubverbindungen genutzt werden. Alternativ können die Trägerringe mit Abstufungen versehen werden, welche sich ineinander setzen lassen. Weiterhin kann eine Kombination aus Löchern und Zapfen oder anderweitige Passformen genutzt werden.

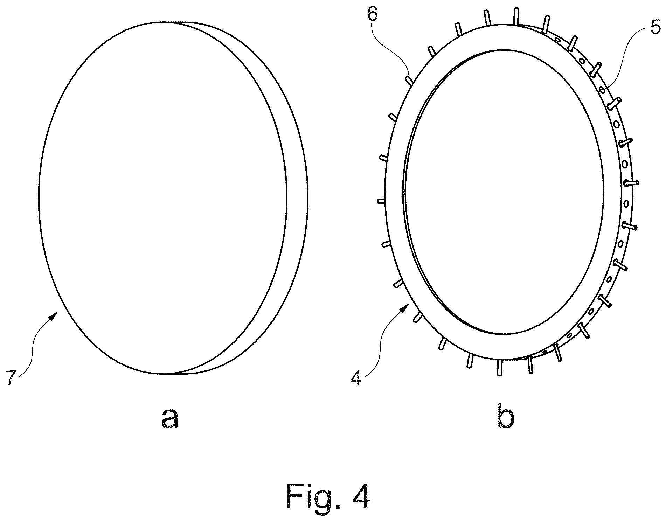

Fig. 4 a zeigt das Rohteil 7 eines Außenrings, welches durch Fräsen in die endgültige Form des Außenrings 4 gebracht werden kann, welche in Fig. 4 b dargestellt ist.

Fig. 4 b zeigt weiterhin Durchgangsbohrungen 5 an der Außenseite des Außenrings 4, welche so angeordnet sein können, dass sie in ihrem Abstand den Bohrungen 8 an den Außenseiten der Schaufeln 3 entsprechen bzw. gegenüberliegen.

Auf diese Weise kann eine Verbindung mittels Schrauben 6 oder Pins 6 erzeugt werden. Diese Pins 6 oder Schrauben sind in Fig. 4b ebenfalls schematisch dargestellt.

Dem zu Folge können die Schrauben 6 oder Pins 6 durch die Durchgangsbohrungen 5 geführt werden und von den Bohrungen 8 an den Außenseiten der Schaufeln 3 aufgenommen werden. Dies ist eine Möglichkeit den Außenring 4 mit einer oder mehreren Schaufeln 3 des Innenrings 2 zu verbinden.

Alternativ hierzu oder in Kombination können stoffschlüssige Verbindungsmittel, wie Klebe- oder Löt- oder Schweißverbindungen genutzt werden, um den Außenring 4 mit mindestens einer der Schaufeln 3 der jeweiligen Innenringe 2 zu verbinden.

Es kann ein Lot mit einer Schmelztemperatur von mindestens 500 °C eingesetzt werden, um eine auch in Dampfturbinen bei den dortigen Temperaturen stabile Lötverbindung zwischen dem Außenring 4 und den Trägerringen 2 oder den Trägerringen 2 untereinander herzustellen.

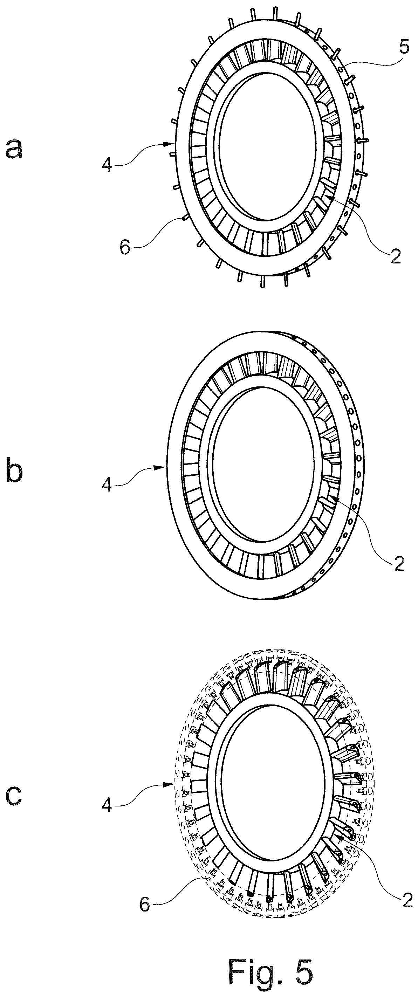

Die Fig. 5 a - c zeigen den möglichen Ablauf der Montage eines Trägerrings 2 an einen Außenring 4 durch Pins 6 oder Schrauben.

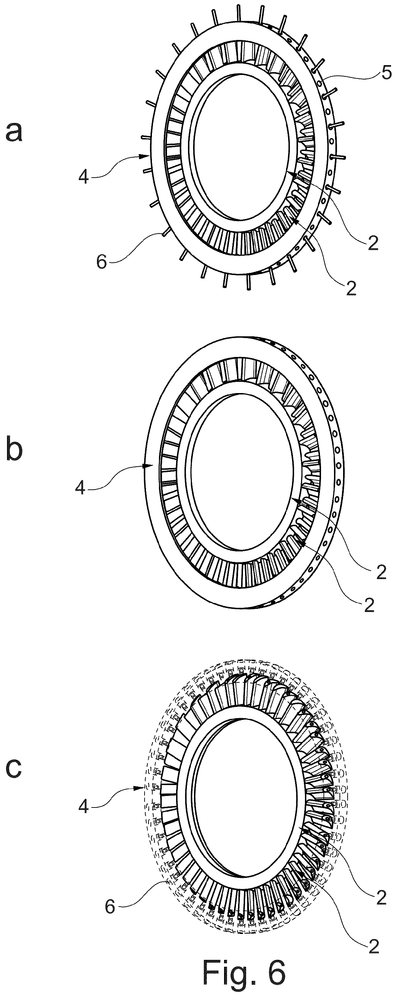

In der Folge zeigen die Fig. 6 a - c den möglichen Ablauf der Montage eines zweiten Trägerrings 2 an den Außenring 4 mit dem ersten Trägerring 2, wobei Pins 6 bzw. Schrauben 6 eingesetzt werden.

Die Fig. 6 c zeigt den möglichen fertig montierten Schaufelkranz 1 mit zwei Trägeringen 2 in einer Ausführung mit einem Außenring 6, welcher über Pins 6 oder Schrauben mit den Trägerringen verbunden ist.

### Bezugszeichenliste

- 1: Schaufelkranz
- 2: Trägerring/Innenring
- 3: Schaufel
- 4: Trägerring/Außenring
- 5: Durchgangsbohrung
- 6: Pin/Schraube
- 7: Rohteil Außenring
- 8: Bohrung

## Patentansprüche

1. Schaufelkranz (1), insbesondere in Form eines Statorrings oder Laufrades für Dampfturbinen, mit mindestens zwei Trägerringen (2; 4), an deren Umfangsseiten jeweils Schaufeln (3) angebracht sind, wobei die Trägerringe (2; 4) direkt oder über ihre Schaufeln (3) miteinander verbunden sind,
wobei sich die Anzahl der Schaufeln (3) des Schaufelkranzes (1) auf die Anzahl der Trägerringe (2; 4) verteilt und die Schaufeln (3) der mindestens zwei Trägerringe (2; 4) jeweils über den Umfang der einzelnen Trägerringe (2; 4) verteilt sind,
wobei die Schaufeln (3) der mindestens zwei Trägerrringe (2; 4) in alternierender Abfolge zueinander angeordnet sind und Strömungskanäle jeweils zwischen zwei zueinander benachbarten Schaufeln (3) durch den Schaufelkranz (1) hindurchführen, und
wobei die einzelnen Schaufeln (3) jeweils einstückig ausgeführt sind.

2. Schaufelkranz (1) nach Anspruch 1, wobei die mindestens zwei Trägerringe (2)
- als Innenringe ausgebildet sind, an deren Außenumfangsseiten jeweils Schaufeln (3) angebracht sind, und gestapelt aufeinander liegen, wobei vorzugsweise ein die Schaufeln (3) des Schaufelkranzes (1) umfassender Außenring (4) vorgesehen ist, der mit jedem der mindestens zwei Trägerringe (2) über deren Schaufeln (3) verbunden ist, oder
- als Außenringe ausgebildet sind, an deren Innenumfangsseiten jeweils Schaufeln (3) angebracht sind, und gestapelt aufeinander liegen, wobei vorzugsweise ein die Schaufeln (3) des Schaufelkranzes (1) umfassender Innenring (4) vorgesehen ist, der mit jedem der mindestens zwei Trägerringe (4) über deren Schaufeln (3) verbunden ist.

3. Schaufelkranz (1) nach Anspruch 1, wobei einer der mindestens zwei Trägerringe (2) einen Innenring bildet, an dessen Aussenumfangsseite Schaufeln (3) angebracht sind, und ein weiterer der mindestens zwei Trägerringe (4) einen Außenring bildet, an dessen Innenumfangsseiten Schaufeln (3) angebracht sind, und wobei die zwei Trägerringe (2) mit ihren Schaufeln (3) ineinander- oder aneinandersetzbar und über ihre Schaufeln (3) miteinander verbunden sind.

4. Schaufelkranz (1) nach einem der vorhergehenden Ansprüche, wobei jeder Trägerring (2; 4) mit seinen Schaufeln (3) integral einstückig, materialhomogen und frei von Gefügeveränderungen in Übergangsbereichen zwischen Schaufeln (3) und Trägerring (2) ausgebildet ist.

5. Schaufelkranz (1) nach einem der vorhergehenden Ansprüche in Verbindung mit Anspruch 2, wobei der Außenring (4) oder der Innenring (2)
- mittels Verbindungselementen, wie Pins (6) oder Schrauben (6), mit mindestens jeweils einer Schaufel (3) eines jeden der mindestens zwei Trägerringe (2) formschlüssig verbunden ist, wobei sich die Verbindungselemente durch Durchgangsausnehmungen (5) im Außenring (4) der im Innenring (2) hindurch in Sacklöcher in die jeweilige Schaufel (3) hineinerstrecken, und/oder
- durch stoffschlüssige Verbindungsmittel, wie eine Klebe- oder Löt- oder Schweißverbindung mit mindestens jeweils einer Schaufel (3) oder der durchgängigen Ringseiteeines jeden der mindestens zwei Trägerringe (2) verbunden ist.

6. Schaufelkranz (1) nach einem der vorhergehenden Ansprüche in Verbindung mit Anspruch 2 oder 3, wobei die mindestens zwei Trägeringe (2)
- mit mindestens jeweils einer Schaufel (3) mit dem Außenring (4) verbunden sind, wobei die Schaufeln (3) aller Trägerringe (2) mit ihren äußeren Enden an eine Innenkontur des Außenrings (4) formangepaßt sind und spaltfrei oder mit definiertem Spalt auf der genannten Innenkontur des Außenrings (4) sitzen, wobei die äußeren Enden der Schaufeln (3) gemeinsam eine Hüllkontur definieren, die komplementär zur Innenkontur des Außenrings (4) ausgebildet ist, und/oder
- mit mindestens jeweils einer Schaufel (3) mit dem Außenring (4) verbunden sind, wobei die Schaufeln (3) an ihren äußere Enden derart konturiert und bemessen sind, dass jeder Trägerring (2) mit seinen Schaufeln (3) in achsialer Richtung in den Außenring (4) paßgenau einschiebbar ist derart, dass die Schaufeln (3) mit ihren äußeren Enden spaltfrei oder mit definiertem Spalt oder einer anderweitigen Positioniermöglichkeit auf dem Innenumfangskontur des Außrings (4) aufsitzen.

7. Schaufelkranz (1) nach einem der vorhergehenden Ansprüche in Verbindung mit Anspruch 2 oder 3, wobei die mindestens zwei Trägeringe (4)
- mit mindestens jeweils einer Schaufel (3) mit dem Innenring (2) verbunden sind, wobei die Schaufeln (3) aller Trägerringe (2) mit ihren inneren Enden an eine Außenkontur des Innenrings (2) formangepaßt sind und spaltfrei oder mit definiertem Spalt auf der genannten Außenkontur des Innenrings (2) sitzen, wobei die inneren Enden der Schaufeln (3) gemeinsam eine Hüllkontur definieren, die komplementär zur Außenkontur des Innenrings (2) ausgebildet ist, und/oder
- mit mindestens jeweils einer Schaufel (3) mit dem Innenring (2) verbunden sind, wobei die Schaufeln (3) an ihren innere Enden derart konturiert und bemessen sind, dass jeder Trägerring (2) mit seinen Schaufeln (3) in achsialer Richtung in den Innenring (2) paßgenau einschiebbar ist derart, dass die Schaufeln (3) mit ihren inneren Enden spaltfrei oder mit definiertem Spalt oder auf der Außumfangskontur des Innenrings (2) aufsitzen.

8. Schaufelkranz (1) nach einem der vorhergehenden Ansprüche in Verbindung mit Anspruch 2 oder 3, wobei die mindestens zwei Trägerringe (2) mit flachen Stirnseiten aufeinander oder ineinander liegen und durch Verschweißen oder Verlöten oder Verkleben oder Verschrauben miteinander verbunden sind und/oder untereinander eine formschlüssige Verbindung eingehen.

9. Schaufelkranz (1) nach einem der vorhergehenden Ansprüche, wobei
- der Abstand einer Schaufel (3) eines Trägerrings (2; 4) zur Schaufel (3) eines weiteren Trägerrings (2; 4) weniger als 4 mm beträgt., und/oder
- die Länge einer Schaufel (3) größer als 20 mm ist, und/oder
- der Durchmesser der mindestens zwei Trägeringe (2) kleiner als 180 mm oder kleiner als 150 mm oder kleiner als 120 mm ist, und/oder
- die Trägerringe (2) den gleichen Durchmesser und die Schaufeln (3) den gleichen Durchmesser und die gleiche Breite und die gleiche Länge haben.

10. Schaufelkranz (1) nach einem der vorhergehenden Ansprüche, wobei die Schaufeln (3)
- zumindest eines der Trägerringe (2) in einem Schaufelfußbereich axial über den Trägerring (2), an dem die Schaufeln (3) befestigt sind, vorspringen und den benachbarten Trägerring (2) axial überlappen, welcher unter oder über die vorspringenden Fußbereiche der Schaufeln (3) des anderen Trägerings gesetzt ist, und/oder
- einander, bei Betrachtung in einer Blickrichtung radial auf die beiden Trägerringe, zumindest teilweise überdecken.

11. Schaufelkranz (1) nach einem der vorgehenden Ansprüche, wobei der Schaufelkranz (1) in radialer Richtung mindestens einmal geteilt sind und/oder die mindestens zwei Trägeringe (2; 4) in radialer Richtung mindestens einmal geteilt sind.

12. Schaufelkranz (1) nach einem der vorhergehenden Ansprüche, wobei die Schaufeln (3) Axialleitschaufeln bilden und in einem axialen Strömungskanal angeordnet sind, der a.) zwischen den Außenumfängen zweier gestapelter Trägerringe (2) und dem Innenumfang eines/des Außenrings (4) oder b.) zwischen zwischen den Innenumfängen zweier gestapelter Trägerringe (2) und dem Außenumfang eines/des Innenrings (4) gebildet ist, wobei vorzugsweise sich die genannten Außenumfänge oder die genannten Innenumfänge der Trägerringe (2) bündig zu einer gemeinsamen, harmonisch konturierten, insbesondere zylindrischen oder kegeligen Innenleitfläche des Strömungskanals ergänzen, wobei der Schaufelkranz (1) vorzugswesie an die äußeren Enden der Schaufeln (3) und/oder an die inneren Enden der Schaufeln (3) angrenzend eine Expansionsschräge in Form einer sich in Strömungsrichtung durch den Schaufelkranz erweiternden Umfangskontur besitzt, die an zumindest einem der Trägerringe (2, 4) ausgebildet ist, wobei die Schaufeln (3) gleichmäßig auf die Trägerringe verteilt sind und an jedem Trägerring zumindest näherungsweise gleichmäßig verteilt angeordnet sind.

13. Turbomaschine, insbesondere Dampfturbine, mit einem Schaufelkranz (1) gemäß einem der vorhergehenden Ansprüche.

14. Verfahren zur Herstellung eines Schaufelkranzes (1) mit an einem Trägerring (2) sitzenden Schaufeln (3), inbesondere für Dampfturbinen, wobei das Verfahren umfasst:
- Herstellen mindestens zweier Trägerringe (2) an deren inneren oder äußeren Umfangsseiten jeweils Schaufeln (3) angebracht sind, die auf die Trägerringe (2) verteilt sind
- Verbinden der mindestens zwei Trägerringe (2) untereinander derart, dass die Schaufeln (3) der mindestens zwei Trägerringe (2) in alternierender Abfolge zueinander angeordnet sind.

15. Verfahren nach dem vorhergehenden Anspruch, wobei zumindest einer der folgenden Schritte ausgeführt wird, nämlich dass:
- die mindestens zwei Trägerringe (2) jeweils als Innenring ausgebildet werden und ein Außenring (4) mit den zumindest zwei Trägerringen (2) über deren Schaufeln (3) verbunden und dabei an den genannten Schaufeln (3) befestigt wird,
- die mindestens zwei Trägerringe (4) jeweils als Außenring ausgebildet werden und ein Innenring (2) mit den zumindest zwei Trägerringen (4) über deren Schaufeln (3) verbunden und dabei an den genannten Schaufeln (3) befestigt wird,
- der Außenring (4) und/oder der Innenring (2) jeweils aus einem Rohteil (7) spanend gefertigt, insbesondere gefräst oder gedreht wird,
- die Trägerringe (2) einschließlich der Schaufeln (3) jeweils aus einem Rohteil gefräst werden,
- die Stirnseiten der von den Trägerringe (2) auskragenden Enden der Schaufeln (3) mit Bohrungen (8) versehen werden, wobei die Bohrungen (8) in das jeweilige Rohteil der Trägerringe (2) eingebracht werden, bevor die Schaufeln (3) aus dem Rohteil gefräst werden,
- der Außenring (4) oder der Innenring (2) mit Durchgangsbohrungen (5) versehen wird, die mit den Bohrungen (8) in den Schaufeln (3) der Trägerringe (2) fluchten, wenn die Trägerringe (2) mit den Schaufeln in den gemeinsamen Außenring (4) oder Innenring (2) eingesetzt werden,
- durch die Durchgangsbohrungen (5) des Außen- oder Innenrings (4; 2) Pins (6) oder Schrauben (6) geführt werden, um den Außen- oder Innenring (4; 2) mit mindestens jeweils einer Schaufel (3) der mindestens zwei Trägerringe (2) zu verbinden, wobei die Pins (6) oder Schrauben (6) in die Bohrungen (8) an den Stirnseiten der Schaufeln (3) geführt werden,
- der Außen- oder Innenring (4; 2) durch stoffschlüssige Verbindungsmittel, wie eine Klebe- oder Löt- oder Schweißverbindung mit mindestens jeweils einer Schaufel (3) der mindestens zwei Trägerringe (2) verbunden wird,
- die/eine Lötverbindung zwischen den Schaufeln (3) der mindestens zwei Trägerringe (2) und dem Außen- oder Innenring (4; 2) und/oder zwischen den mehreren Trägerringen (2; 4) mit einem Lot, das eine Schmelztemperatur von mindestens 500 °C aufweist, hergestellt wird,
- die mindestens zwei Trägerringe (2) mit flachen Stirnseiten aufeinander gelegt werden und durch Verschweißen, Verlöten, Verkleben oder Verschrauben miteinander verbunden werden,
- die mindestens zwei Trägerringe (2), einer als Außenring und einer als Innenringering ausgebildet, ineinander gesteckt werden und durch Verschweißen, Verlöten, Verkleben oder Verschrauben miteinander verbunden werden,
- die mindestens zwei Trägerringe (2) untereinander formschlüssig verbunden werden.
